(19) Europäisches Patentamt
European Patent Office
Office européen des brevets

(11) **EP 4 700 864 A1**

(12) **EUROPEAN PATENT APPLICATION**
published in accordance with Art. 153(4) EPC

(43) Date of publication:
**25.02.2026 Bulletin 2026/09**

(21) Application number: **23934068.0**

(22) Date of filing: **19.04.2023**

(51) International Patent Classification (IPC):
*H01M 4/505* (2010.01)    *H01M 4/525* (2010.01)
*H01M 10/052* (2010.01)    *H01M 10/0562* (2010.01)

(52) Cooperative Patent Classification (CPC):
Y02E 60/10

(86) International application number:
**PCT/JP2023/015677**

(87) International publication number:
**WO 2024/218923 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sumitomo Chemical Company, Limited
Tokyo 103-6020 (JP)**

(72) Inventors:
• **KAGEURA, Jun-ichi
Niihama-shi, Ehime 792-8521 (JP)**
• **MURAKAMI, Chikara
Niihama-shi, Ehime 792-8521 (JP)**

(74) Representative: **Vossius & Partner
Patentanwälte Rechtsanwälte mbB
Siebertstraße 3
81675 München (DE)**

(54) **LITHIUM METAL COMPOSITE OXIDE POWDER, POSITIVE ELECTRODE ACTIVE MATERIAL FOR SOLID SECONDARY BATTERY, POSITIVE ELECTRODE FOR SOLID SECONDARY BATTERY, AND SOLID SECONDARY BATTERY**

(57)    A lithium metal composite oxide powder that has a layered structure and is used for a solid secondary battery containing at least Li, Mn, and an element M1, in which, in a volume-based cumulative particle size distribution of a projected area equivalent circle diameter of the lithium metal composite oxide powder, which is measured by static image analysis, in a case where the equivalent circle diameters ($\mu$m), at which cumulative ratios from a small particle side are 50% and 90%, are each defined as CD50 and CD90, the number average convexity of particles satisfying a range of the CD50 or more and the CD90 or less is 0.860 or more and 0.980 or less, and Compositional Formula (1) below is satisfied.

FIG. 2

EP 4 700 864 A1

**Description**

TECHNICAL FIELD

The present invention relates to a lithium metal composite oxide powder, a positive electrode active material for a solid secondary battery, a positive electrode for a solid secondary battery, and a solid secondary battery.

BACKGROUND ART

A lithium secondary battery includes a liquid-type secondary battery, in which an electrolytic solution obtained by dissolving an electrolyte in an organic solvent, is used, and a solid secondary battery, in which a solid electrolyte is used. The solid secondary battery has advantages such as an improvement in energy density and a high degree of freedom in design. Thus, development thereof is in progress.

On the other hand, the solid secondary battery has a disadvantage in that interface resistance between an electrode active material and a solid electrolyte is more likely to increase than that of the liquid-type secondary battery. Therefore, a particle shape of the electrode active material used in the solid secondary battery affects performance of the solid secondary battery.

For example, Patent Document 1 discloses a positive electrode active material for an all-solid state lithium ion battery, which contains high-strength single particles that are difficult to break during pressing, since breakage of the positive electrode active material during pressing in a battery manufacturing step causes a conductive path to be interrupted, resulting in a decrease in output. Patent Document 1 discloses that the shape of the single particles is defined from a convexity of the particles.

Citation List

Patent Document

Patent Document 1: Japanese Unexamined Patent Application, First Publication No. 2021-22547

SUMMARY OF INVENTION

Technical Problem

There is room for further improving performance of a solid secondary battery by controlling the shape of particles of a lithium metal composite oxide powder used in a solid secondary battery from another aspect.

The present invention has been made in view of the above circumstances, and an object of the present invention is to provide a lithium metal composite oxide powder for a solid secondary battery, a positive electrode active material for a solid secondary battery, a positive electrode for a solid secondary battery, and a solid secondary battery, in which a solid secondary battery having low resistance and excellently maintained interface bonding between a positive electrode active material and a solid electrolyte, even after a charging and discharging cycle test, can be obtained.

Solution to Problem

The present invention includes the following aspects.

[1] A lithium metal composite oxide powder that has a layered structure and is used for a solid secondary battery containing at least Li, Mn, and an element M1, in which, in a volume-based cumulative particle size distribution of a projected area equivalent circle diameter of the lithium metal composite oxide powder, which is measured by static image analysis, in a case where the equivalent circle diameters ($\mu$m), at which cumulative ratios from a small particle side are 50% and 90%, are each defined as CD50 and CD90, the number average convexity of particles satisfying a range of the CD50 or more and the CD90 or less is 0.860 or more and 0.980 or less, and Compositional Formula (1) below is satisfied.

$$aLi_2MnO_3 \cdot (1-a)LiM1O_2 \ ... \qquad (1)$$

(In Formula (1), $0.1 < a < 1$, and M1 is one or more elements selected from the group consisting of Ni, Co, Mn, Fe, Cu, Ti, V, Na, Mg, Ca, Sr, Ba, B, Al, Si, P, W, Mo, Nb, Zn, Sn, Zr, Cr, Ga, Ge, Pd, Ag, Cd, In, and V.)

[2] The lithium metal composite oxide powder according to [1], in which, in the cumulative particle size distribution, in a case where the equivalent circle diameter (μm), at which the cumulative ratio from the small particle side is 10%, is defined as CD10, the number average convexity of particles satisfying a range of the CD10 or more and the CD50 or less is 0.950 or more and less than 1.

[3] The lithium metal composite oxide powder according to [1] or [2], in which the CD90 is more than 7.0 μm and 20.0 μm or less.

[4] The lithium metal composite oxide powder according to [2] or [3], in which the CD10 is 3.0 μm or more and 7.0 μm or less.

[5] The lithium metal composite oxide powder according to any one of [1] to [4], in which a BET specific surface area is 0.3 m$^2$/g or more and 2.0 m$^2$/g or less.

[6] The lithium metal composite oxide powder according to any one of [1] to [5], in which the element M1 essentially includes Ni, and the proportion of Ni in a total amount of the element M1 is 20 mol% or more.

[7] A positive electrode active material for a solid secondary battery, including the lithium metal composite oxide powder according to any one of [1] to [6].

[8] A positive electrode for a solid secondary battery, including the positive electrode active material for a solid secondary battery according to [7].

[9] A solid secondary battery including the positive electrode for a solid secondary battery according to [8].

Advantageous Effects of Invention

According to the present invention, it is possible to provide a lithium metal composite oxide powder, a positive electrode active material for a solid secondary battery, a positive electrode for a solid secondary battery, and a solid secondary battery, capable of obtaining a solid secondary battery, in which resistance is difficult to increase during charging and discharging.

In the present specification, whether the solid secondary battery is a solid secondary battery having low resistance even after a charging and discharging cycle test is determined from an impedance value |Z| at a frequency of 0.1 Hz, which is obtained from measurement of an alternating current impedance of the solid secondary battery after the charging and discharging cycle test.

In a case where |Z| is 200 Ω or less, it is evaluated that the solid secondary battery has low resistance even after the charging and discharging cycle test. Such a solid secondary battery refers to a battery having a longer life. Details of manufacturing conditions and the like of the solid secondary battery for calculating the resistance after the charging and discharging cycle test will be described later.

BRIEF DESCRIPTION OF DRAWINGS

[FIG. 1] A schematic view showing the overall configuration of a solid secondary battery.
[FIG. 2] An electron micrograph of a lithium metal composite oxide manufactured in Example 1.
[FIG. 3] A schematic view showing an aspect in which a lithium metal composite oxide powder for a solid secondary battery and a solid electrolyte of the present embodiment are in contact with each other.
[FIG. 4] A schematic view showing an aspect in which a lithium metal composite oxide powder for a solid secondary battery and a solid electrolyte other than the present embodiment are in contact with each other.
[FIG. 5] A schematic view showing an aspect in which a lithium metal composite oxide powder for a solid secondary battery and a solid electrolyte other than the present embodiment are in contact with each other.

DESCRIPTION OF EMBODIMENTS

In the present specification, in a case where a numerical range is described as, for example, "1 to 10 μm", it means a range from 1 μm to 10 μm, and it means a numerical range including 1 μm as a lower limit value and 10 μm as an upper limit value.

<Lithium metal composite oxide powder>

The present embodiment is a lithium metal composite oxide powder that can be suitably used for a positive electrode active material of a solid secondary battery.

The lithium metal composite oxide powder has a layered structure, contains at least Li, Mn, and an element M1, and satisfies Compositional Formula (1) which will be described later.

The lithium metal composite oxide powder is an aggregate of a plurality of particles. The aggregate of the plurality of particles includes secondary particles which are aggregates of primary particles. The aggregate of the plurality of particles may include only the secondary particles or may be a mixture of the primary particles and the secondary particles. In a case where the lithium metal composite oxide powder is a mixture of the primary particles and the secondary particles, the proportion of the number of secondary particles to the total number of particles is 90% or more.

The "primary particle" means a particle in which, apparently, no grain boundary is present at the time of observing the particle in a visual field of 5000 times or more and 20000 times or less using a scanning electron microscope or the like.

The "secondary particle" is a particle in which the above-described primary particles are aggregated. That is, the secondary particle is an aggregate of the primary particles.

<<Number average convexity>>

A convexity of the lithium metal composite oxide powder is a ratio of an envelope length to a perimeter length of one particle measured in a planar image of the lithium metal composite oxide powder, that is, a perimeter length envelope degree. Hereinafter, the term "perimeter length envelope degree" will be abbreviated as "convexity".

In the present specification, the number average convexity is an indicator indicating a degree of contact of the lithium metal composite oxide powder with the solid electrolyte.

The convexity is calculated by the following equation from a concept called an envelope perimeter length and an actual perimeter length for one particle.

$$\text{Convexity} = \text{envelope perimeter length}/\text{actual perimeter length}$$

The envelope perimeter length is calculated from a virtual rubber band wound around a perimeter of one particle.

The number average convexity of the lithium metal composite oxide powder is measured by the following method.

[Method for measuring number average convexity]

The number average convexity of the lithium metal composite oxide powder is measured by static image analysis.

The static image analysis can be performed by a static automatic image analysis device. As the static automatic image analysis device, for example, Morphologi 4 (manufactured by Malvern Panalytical Ltd.) can be used. The convexity and a projected area equivalent circle diameter of each particle are automatically measured by the static automatic image analysis device.

Here, the projected area equivalent circle diameter is a diameter of a circle having the same area as the projected area of one particle of the lithium metal composite oxide powder.

First, a volume-based cumulative particle size distribution of a projected area equivalent circle diameter of the lithium metal composite oxide powder, which is measured by the static image analysis, is obtained.

Specifically, the static image analysis is performed by the following method.

First, 0.5 mg of the lithium metal composite oxide powder is introduced into an analysis device supply unit and sprayed onto and fixed to a preparation.

Next, the fixed particles are observed with an optical microscope to obtain an image. The obtained image is analyzed, and the projected area equivalent circle diameter of the lithium metal composite oxide powder is calculated. The volume-based cumulative particle size distribution is obtained from the obtained projected area equivalent circle diameter.

The lithium metal composite oxide powder introduced into the analysis device supply unit may be a lithium metal composite oxide powder including a coating layer or may be a lithium metal composite oxide powder not including a coating layer. Since the coating layer is extremely thin with a thickness of about 1 to 20 nm, even in a case where the coating layer is provided, substantially the same measurement value as that in a case where the coating layer is not provided is obtained as the convexity.

In the obtained cumulative particle size distribution, equivalent circle diameters ($\mu$m), at which cumulative ratios from the small particle side are 10%, 50%, and 90%, are each defined as CD10, CD50, and CD90.

In a static image of the lithium metal composite oxide powder, at least 100 particles, in which the equivalent circle diameter ($\mu$m) satisfies a range of the CD50 or more and the CD90 or less, are selected, and the number average convexity is automatically measured. Hereinafter, the range of "CD50 or more and CD90 or less" will be described as "CD50 to CD90". The number average convexity in which the equivalent circle diameter is in the range of the CD50 to the CD90 is defined as "number average convexity 1 ".

The lithium metal composite oxide powder has the number average convexity 1 of 0.860 to 0.980. The number average convexity 1 is preferably 0.880 or more, more preferably 0.900 or more, and still more preferably 0.910 or more. In addition, the number average convexity 1 is preferably 0.970 or less, more preferably 0.965 or less, and still more preferably 0.960 or less.

The upper limit value and the lower limit value can be optionally combined. As an example of the combination, the number average convexity 1 is preferably 0.880 to 0.970, more preferably 0.900 to 0.990, and still more preferably 0.910 to 0.960.

The number average convexity 1 is an indicator indicating a degree of contact of a particle, in which the equivalent circle diameter ($\mu$m) satisfies the range of the CD50 to the CD90, that is, a particle having a large particle diameter, among particles included in the lithium metal composite oxide powder, with a solid electrolyte.

In a case where the number average convexity 1 is the above-described lower limit value or more, the solid electrolyte is likely to enter a recess portion on a surface of one particle of a lithium metal composite oxide, and a contact area between the lithium metal composite oxide powder and the solid electrolyte is likely to increase.

In addition, in a case where the solid electrolyte enters the recess portion, the contact between the lithium metal composite oxide powder and the solid electrolyte is likely to be maintained even in a case where the particles of the lithium metal composite oxide are repeatedly expanded and contracted during a charging and discharging cycle test, and a solid secondary battery having low resistance is obtained even after the charging and discharging cycle test.

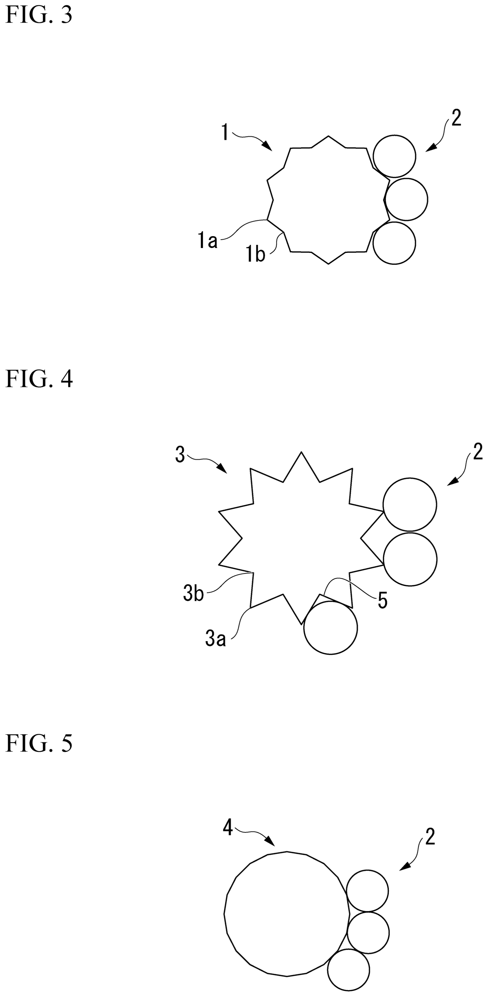

A lithium metal composite oxide particle 1 shown in FIG. 3 has a protrusion portion 1a and a recess portion 1b on a surface. In a case where the number average convexity 1 satisfies the range of the present invention, a solid electrolyte 2 is likely to enter the recess portion 1b on the surface of the lithium metal composite oxide particle 1, and the contact area between the lithium metal composite oxide particle 1 and the solid electrolyte 2 is likely to increase.

As the contact area between one particle of the lithium metal composite oxide powder and the solid electrolyte increases, the interface between the lithium metal composite oxide powder and the solid electrolyte is likely to be formed in an excellent manner.

In a case where the solid electrolyte enters the recess portion of the particles of the lithium metal composite oxide powder and the interface between the lithium metal composite oxide powder and the solid electrolyte is formed in an excellent manner, the contact between the lithium metal composite oxide powder and the solid electrolyte is likely to be maintained in a case of repeating charging and discharging of the solid secondary battery, and a solid secondary battery having low resistance is obtained even after the charging and discharging cycle test.

For example, a lithium metal composite oxide particle 3 shown in FIG. 4 has a protrusion portion 3a and a recess portion 3b on a surface. In a case where the number average convexity 1 is less than the lower limit value of the present invention, the solid electrolyte 2 does not enter the recess portion 3b on the surface of the lithium metal composite oxide particle 3 and is in point contact at the protrusion portion 3a of the lithium metal composite oxide particle 3. Thus, the contact area with the solid electrolyte 2 is difficult to increase. In a case where charging and discharging are repeated in such a state, a contact point with the solid electrolyte is interrupted and the resistance is increased in a case where the expansion and contraction of the particles of the lithium metal composite oxide occurs.

In addition, the solid electrolyte 2 does not sufficiently enter the recess portion 3b, and for example, on a surface indicated by a reference numeral 5, the lithium metal composite oxide particle 3 does not come into contact with the solid electrolyte 2. Thus, a utilization rate of the lithium metal composite oxide particle is likely to decrease.

In a case where the number average convexity 1 exceeds the upper limit value of the present invention and is 1 or too close to 1, a smooth lithium metal oxide particle 4 having no unevenness on a surface is obtained as shown in FIG. 5. In this case as well, the lithium metal oxide particle 4 and the solid electrolyte 2 are in point contact. Thus, the contact area with the solid electrolyte 2 is difficult to increase. In a case where charging and discharging are repeated in such a state, a contact point with the solid electrolyte is interrupted and the resistance is increased in a case where the expansion and contraction of the particles of the lithium metal composite oxide occurs.

In a static image of the lithium metal composite oxide powder, at least 100 particles, in which the equivalent circle diameter ($\mu$m) satisfies the range of the CD10 to the CD50, are selected, and the number average convexity is automatically measured. The number average convexity in which the particle diameter is in the range of the CD10 to the CD50 is defined as "number average convexity 2".

The number average convexity 2 is preferably 0.950 or more and less than 1. The number average convexity 2 is more preferably 0.960 or more and still more preferably 0.960 or more. In addition, the number average convexity 2 is more preferably 0.995 or less and still more preferably 0.990 or less.

The upper limit value and the lower limit value can be optionally combined. As an example of the combination, the number average convexity 2 is preferably 0.960 to 0.995, and more preferably 0.960 to 0.990.

The number average convexity 2 is an indicator indicating a degree of contact of a particle, in which the particle diameter satisfies the range of the CD10 to the CD50, that is, a particle having a small particle diameter, among particles included in the lithium metal composite oxide powder, with a solid electrolyte.

In a case where the number average convexity 2 satisfies the above-described range, the surface of one particle of the lithium metal composite oxide has an appropriate unevenness, and the contact area between the lithium metal composite oxide powder and the solid electrolyte increases and the interface is likely to be formed.

The CD90 is preferably more than 7.0 μm and 20.0 μm or less. The CD90 is more preferably 8.0 μm or more and still more preferably 8.5 μm or more. In addition, the CD90 is more preferably 16.0 μm or less, still more preferably 14.0 μm or less, even more preferably 13.0 μm or less, and particularly preferably 12.0 μm or less.

The upper limit value and the lower limit value can be optionally combined. As an example of the combination, the CD90 is preferably 8.0 to 16.0 μm, more preferably 8.5 to 14.0 μm, still more preferably 8.5 to 13.0 μm, and particularly preferably 8.5 to 12.0 μm.

In a case where the CD90 satisfies the above-described range, the proportion of coarse lithium metal composite oxide having a long diffusion distance of lithium ions is small. Thus, the discharge rate characteristics are excellent, which is preferable.

The CD10 is preferably 3.0 to 7.0 μm. The CD10 is more preferably 4.0 μm or more, and still more preferably 4.5 μm or more. In addition, the CD10 is more preferably 6.5 μm or less, and still more preferably 6.0 μm or less.

The upper limit value and the lower limit value can be optionally combined. As an example of the combination, the CD10 is preferably 4.0 to 6.5 μm, and more preferably 4.5 to 6.0 μm.

In a case where the CD10 satisfies the above-described range, the proportion of the minute lithium metal composite oxide powder that is electrically isolated without being able to come into contact with a conductive material or the solid electrolyte in the positive electrode can be reduced, and a high charging and discharging capacity can be obtained, which is preferable.

The lithium metal composite oxide powder has a BET specific surface area preferably satisfying 0.3 to 2.0 $m^2/g$, more preferably satisfying 0.4 to 1.6 $m^2/g$, and still more preferably satisfying 0.5 to 1.4 $m^2/g$.

In a case where the BET specific surface area satisfies the above-described range, the contact area between the lithium metal composite oxide powder and the solid electrolyte increases, and the interface is likely to be formed.

[Method for measuring BET specific surface area]

The "BET specific surface area" is a value which is measured by the Brunauer, Emmett, and Teller (BET) method. Nitrogen gas is used as an adsorbed gas in the measurement of the BET specific surface area. For example, the BET specific surface area (unit: $m^2/g$) can be measured using a BET specific surface area meter (for example, Macsorb (registered trademark) manufactured by Mountech Co., Ltd.) after drying 1 g of a powder to be measured in a nitrogen atmosphere at 105°C for 30 minutes.

The lithium metal composite oxide powder satisfies Compositional Formula (1) below.

$$aLi_2MnO_3 \cdot (1 - a)LiM1O_2 \; ... \qquad (1)$$

(In Formula (1), 0.1 < a < 1, and M1 is one or more elements selected from the group consisting of Ni, Co, Mn, Fe, Cu, Ti, V, Na, Mg, Ca, Sr, Ba, B, Al, Si, P, W, Mo, Nb, Zn, Sn, Zr, Cr, Ga, Ge, Pd, Ag, Cd, In, and V.)

In Formula (1), from a viewpoint of obtaining a solid secondary battery having a higher capacity, a is preferably 0.25 or more, more preferably 0.35 or more, and still more preferably 0.45 or more. In addition, a is preferably 0.90 or less, more preferably 0.80 or less, and still more preferably 0.75 or less.

The upper limit value and the lower limit value can be optionally combined. As an example of the combination, a is preferably 0.25 to 0.90, more preferably 0.35 to 0.80, and still more preferably 0.45 to 0.75.

In Formula (1), in a case where a is within the above-described range, it is easy to obtain a lithium composite metal oxide powder having a stabilized crystal structure. Since the stabilized crystal plane and the solid electrolyte are bonded and an excellent interface is formed, the bonding of the interface between the lithium metal composite oxide powder and the solid electrolyte is likely to be maintained in an excellent manner in a case of repeating charging and discharging of the solid secondary battery, and a solid secondary battery having low resistance is obtained even after the charging and discharging cycle test.

In Formula (1), the element M1 preferably contains Ni. The proportion of Ni contained in the total amount of the element M1 is preferably 20 mol% or more, more preferably 25 mol% or more, and still more preferably 30 mol% or more. In addition, the proportion of Ni contained in the total amount of the element M1 is preferably 90 mol% or less, more preferably 80 mol% or less, and still more preferably 70 mol% or less.

The upper limit value and the lower limit value can be optionally combined. As an example of the combination, the proportion of Ni contained in the total amount of the element M1 is preferably 20 to 90 mol%, more preferably 25 to 80 mol%, and still more preferably 30 to 70 mol%.

In Formula (1), the element M1 preferably contains Mn. The proportion of Mn contained in the total amount of the element M1 is preferably 5 mol% or more, more preferably 10 mol% or more, and still more preferably 15 mol% or more. In addition, the proportion of Mn contained in the total amount of the element M1 is preferably 50 mol% or less, more preferably 40 mol% or less, and still more preferably 35 mol% or less.

In Formula (1), the element M1 is preferably one or more elements selected from the group consisting of Ni, Co, Mn, Fe, Cu, Ti, Mg, Ca, Ba, B, Al, Si, P, W, Mo, Nb, Zn, Sn, and Zr, and more preferably one or more elements selected from the group consisting of Ni, Co, Mn, Mg, Ba, B, Al, Si, P, W, Mo, Nb, and Zr.

The upper limit value and the lower limit value can be optionally combined. As an example of the combination, the proportion of Mn contained in the total amount of the element M1 is preferably 5 to 50 mol%, more preferably 10 to 40 mol%, and still more preferably 15 to 35 mol%.

[Composition analysis]

A composition of the lithium metal composite oxide powder can be analyzed, for example, using an inductively coupled plasma emission spectrometer (for example, SPS3000 manufactured by Seiko Instruments Inc.) after the lithium metal composite oxide powder is dissolved in hydrochloric acid.

The crystal structure of the lithium metal composite oxide powder is a layered structure, and it is more preferably a hexagonal crystal structure or a monoclinic crystal structure.

The hexagonal crystal structure belongs to any one space group selected from the group consisting of P3, $P3_1$, $P3_2$, R3, P-3, R-3, P312, P321, $P3_1 12$, $P3_1 21$, $P3_2 12$, $P3_2 21$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3/m$, P622, $P6_1 22$, $P6_5 22$, $P6_2 22$, $P6_4 22$, $P6_3 22$, P6mm, P6cc, $P6_3 cm$, $P6_3 mc$, P-6m2, P-6c2, P-62m, P-62c, P6/mmm, P6/mcc, $P6_3/mcm$, and $P6_3/mmc$.

In addition, the monoclinic crystal structure belongs to any one space group selected from the group consisting of P2, $P2_1$, C2, Pm, Pc, Cm, Cc, P2/m, $P2_1/m$, C2/m, P2/c, $P2_1/c$, and C2/c.

Among these, from the viewpoint of obtaining a solid secondary battery having a high discharge capacity, the crystal structure is particularly preferably a hexagonal crystal structure belonging to the space group R-3m or a monoclinic crystal structure belonging to C2/m.

$Li_2MnO_3$ in Formula (1) has a monoclinic crystal structure belonging to the space group C2/m. By adopting a composition containing Mn, a lithium metal composite oxide having a crystal structure of $Li_2MnO_3$ is obtained, and a high capacity is easily exhibited.

The crystal structure of the lithium metal composite oxide can be calculated by performing a powder X-ray diffraction measurement of the lithium metal composite oxide using $CuK\alpha$ as a radiation source and a measurement range of a diffraction angle 20 of 10° to 90°. Specifically, the crystal structure can be confirmed by observation using a powder X-ray diffractometer (for example, Ultima IV manufactured by Rigaku Corporation).

[Coating layer]

A coating layer consisting of a metal composite oxide having a lithium ion conductivity may be formed on the surface of the particles of the lithium metal composite oxide. By forming the coating layer on the surface of the particles of the lithium metal composite oxide, a decomposition reaction of the solid electrolyte occurring between the lithium metal composite oxide and the solid electrolyte is suppressed, and charging and discharging efficiency of the solid secondary battery is improved. For example, in a case where an argyrodite-type sulfide solid electrolyte or sulfide solid electrolyte which will be described later is used as the solid electrolyte, the decomposition reaction of the solid electrolyte is suppressed by forming the coating layer on the surface of the lithium metal composite oxide, and a stable battery operation is possible.

A thickness of the coating layer may be adjusted as long as the effects of the present application are not impaired. Specifically, the thickness is preferably about 1 to 20 nm.

The thickness of the coating layer is obtained by an analysis result using a scanning transmission electron microscope (STEM)-energy dispersive X-ray spectroscopy (EDX). It is possible to obtain the thickness of the coating layer by generating a line profile of an element unique to the coating layer and setting a range in which the unique element described above is detected based on the obtained line profile as the range in which the coating layer is present.

As such a metal composite oxide, a metal composite oxide of Li and at least one element selected from the group consisting of Nb, Si, P, Al, W, Ta, Ti, Zr, Mo, and B is an exemplary example.

As a method for forming the coating layer, for example, a method for adding and mixing a compound having an element contained in the coating layer with a lithium metal composite oxide and performing a heat treatment, a method for spraying a solution having an element contained in the coating layer onto a lithium metal composite oxide and performing a heat treatment, and a method for immersing a lithium metal composite oxide in a solution having an element contained in the coating layer and performing a heat treatment, and the like are exemplary examples.

<Method for manufacturing lithium metal composite oxide powder>

Next, a method for manufacturing the lithium metal composite oxide powder will be described.

The method for manufacturing the lithium metal composite oxide powder includes at least a step of manufacturing a hydroxide precursor, a step of calcining a mixture of the hydroxide precursor and a lithium compound, and a step of crushing a calcined product obtained by the calcining step.

[Step of manufacturing hydroxide precursor]

The hydroxide precursor can be generally manufactured by a known semi-continuous method (semi-batch method). As a preferred reaction vessel, a reaction vessel not including an overflow pipe, and a device including a thickening tank connected to an overflow pipe, which has a mechanism for thickening an overflowed product in the thickening tank and circulating the thickened product to the reaction vessel again are exemplary examples.

Hereinafter, the method will be described using a method for manufacturing a hydroxide precursor containing Ni, Co, and Mn as metals by a semi-continuous method as an example.

Specifically, first, a nucleus of a particle of the hydroxide precursor is generated, and then the nucleus is grown.

As the hydroxide precursor, a metal composite hydroxide containing Ni, Co, and Mn is an exemplary example.

As a metal raw material solution in a case of manufacturing the hydroxide precursor containing Ni, Co, and Mn, a nickel salt solution, a cobalt salt solution, and a manganese salt solution are exemplary examples.

A nickel salt which is a solute of the above-described nickel salt solution is not particularly limited, and, for example, one or two or more of nickel sulfate, nickel nitrate, nickel chloride, and nickel acetate can be used.

As a cobalt salt which is a solute of the above-described cobalt salt solution, for example, one or two or more of cobalt sulfate, cobalt nitrate, cobalt chloride, and cobalt acetate can be used.

As a manganese salt that is a solute of the manganese salt solution, for example, any one or two or more of manganese sulfate, manganese nitrate, manganese chloride, and manganese acetate can be used.

· Nucleus generating step

A metal raw material mixed solution, a complexing agent, and an alkaline aqueous solution are reacted to generate a nucleus of a metal composite hydroxide represented by $Ni_{1-x-y}Co_xMn_yO_w(OH)_{2-w}$ ($0 < 1 - x - y$, $0 < x$, $0 < y$, $0 < w < 1$). The metal raw material mixed solution is a mixed solution of a nickel salt solution, a cobalt salt solution, and a manganese salt solution.

The metal raw material mixed solution, the complexing agent, and an alkaline aqueous solution are each continuously supplied to a reaction vessel equipped with a stirrer at the same time. This generates nuclei.

In the semi-continuous method, in order to adjust a pH value of the mixed solution containing the metal raw material mixed solution and the complexing agent, the alkaline aqueous solution is added to the mixed solution before the pH of the mixed solution turns from alkaline into neutral. As the alkaline aqueous solution, sodium hydroxide or potassium hydroxide can be used.

In addition, the complexing agent is a compound capable of forming a complex with nickel ions and cobalt ions in an aqueous solution. As the complexing agent, for example, an ammonium ion feeder, hydrazine, ethylenediaminetetraacetic acid, nitrilotriacetic acid, uracil diacetic acid, and glycine are exemplary examples. As the ammonium ion feeder, for example, ammonium salts such as ammonium hydroxide, ammonium sulfate, ammonium chloride, ammonium carbonate, and ammonium fluoride can be used.

As the complexing agent, an ammonium ion feeder is preferable.

In the nucleus generating step, a concentration of the complexing agent in the reaction vessel is controlled such that a ratio of a molar concentration of the manganese salt contained in the metal raw material solution to a molar concentration of ammonium in the reaction vessel is in a range of 1.0 to 2.0. Accordingly, the number average convexity 1 can be controlled within the range of the present invention.

A value of pH in the present specification is defined as a value measured in a case where the temperature of the mixed solution is 40°C. The pH of the mixed solution is measured in a case where the temperature of the mixed solution sampled from a reaction vessel reaches 40°C.

In a case where the temperature of the sampled mixed solution is lower than 40°C, the pH is measured when the mixed solution is heated and reaches 40°C. In a case where the temperature of the sampled mixed solution is higher than 40°C, the pH is measured when the mixed solution is cooled to reach 40°C.

At the time of the reaction, the temperature of the reaction vessel is controlled in a range of, for example, 20°C or higher and 80°C or lower and preferably 30°C or higher and 70°C or lower.

In addition, in the nucleus generating step, the pH value in the reaction vessel is controlled, for example, in a range of pH 10 to pH 13, preferably in a range of pH 11 to pH 13.

The substances in the reaction vessel in the nucleus generating step are stirred and mixed together.

As an example of a stirring rotation speed, the stirring rotation speed is preferably more than 1000 rpm, more preferably 1100 rpm or more, and still more preferably 1500 rpm or more. Stirring under such stirring conditions makes it easy to uniformly mix the supplied individual raw material solutions.

After a predetermined period of time has elapsed from the start of the nucleus generating step, the generated nuclei overflow from the reaction vessel, and are sedimented and thickened in a thickening tank connected to the overflow pipe. It is preferable that the predetermined period of time is appropriately adjusted according to a feeding amount of the raw material solution and a slurry concentration in the reaction vessel. In general, the period of time is preferably 0.1 to 10 hours.

[Nucleus growth step]

The thickened nuclear-containing slurry is refluxed to the reaction vessel, and the nuclei are grown again in the reaction vessel.

It is preferable that a nitrogen gas or an argon gas is supplied into the reaction vessel and the thickening tank. By supplying these gases, it is possible to prevent Mn, which is easily oxidized, from being oxidized and changing to an irregularly shaped oxide particle. By using the precursor obtained by suppressing the oxidation of Mn, the number average convexity 1 can be controlled within the range of the present invention.

The concentration of the complexing agent in the reaction vessel in the nucleus growth step can be controlled to be in a range where the ratio of the molar concentration of the manganese salt contained in the metal raw material solution to the molar concentration of the ammonium in the reaction vessel is in a range of 1.0 to 2.0, thereby controlling the number average convexity 1 within the range of the present invention.

The pH in the nucleus growth step is controlled, for example, in a range of pH 9 to pH 12, preferably pH 9 to pH 11.5.

By the above-described step, a slurry containing a nickel-cobalt-manganese metal composite hydroxide is obtained as a metal composite hydroxide-containing slurry. In a case of isolating the nickel-cobalt-manganese metal composite hydroxide, a method for dewatering a metal composite hydroxide-containing slurry by centrifugal separation, suction filtration, or the like is preferable.

After the above reaction, dewatering, drying, and sieving are carried out to obtain a hydroxide precursor containing Ni, Co, and Mn.

[Step of calcining mixture of hydroxide precursor and lithium compound]

This step is a step of calcining a mixture obtained by mixing a lithium compound and a hydroxide precursor.

The hydroxide precursor is dried and then mixed with a lithium compound. After the drying of the hydroxide precursor, classification may be appropriately performed.

As the lithium compound, at least one of lithium carbonate, lithium nitrate, lithium acetate, lithium hydroxide, lithium oxide, lithium chloride, and lithium fluoride can be used. Among the above, any one of lithium hydroxide and lithium carbonate or a mixture thereof is preferable. In addition, in a case where lithium hydroxide contains lithium carbonate, a content of lithium carbonate in lithium hydroxide is preferably 5 mass% or less.

A lithium compound and a hydroxide precursor are mixed in consideration of a compositional ratio of a final target product to obtain a mixture. Specifically, the lithium compound and the hydroxide precursor are mixed at a ratio corresponding to the compositional ratio of Compositional Formula (1) described above. An amount (molar ratio) of lithium atoms with respect to the total amount 1 of metal atoms contained in the hydroxide precursor is preferably 1.10 or more, more preferably 1.12 or more, and still more preferably 1.15 or more.

A calcined product is obtained by calcining a mixture of the lithium compound and the hydroxide precursor.

The obtained mixture is calcined at a calcining temperature of 500°C to 1050°C in, for example, an oxygen-containing atmosphere. By calcining the mixture, crystals of the lithium metal composite oxide grow.

The calcining temperature in the present specification is the temperature of an atmosphere in a calcining furnace and means a highest temperature of holding temperatures (highest holding temperature).

In a case where the calcining step includes a plurality of heating steps, the calcining temperature means the temperature at the time of heating at the highest holding temperature in each heating step.

Specifically, the holding temperature is preferably 550°C to 1000°C and preferably 600°C to 1000°C.

In addition, as a time for holding at the above-described holding temperature, 0.1 to 20 hours is an exemplary example, preferably 0.5 to 10 hours.

In addition, the mixture is preferably calcined in the oxygen-containing atmosphere. Specifically, it is preferable to introduce an oxygen-containing gas to create an oxygen-containing atmosphere in the calcining furnace.

The temperature rising rate is calculated from a time taken while the temperature begins to be raised and reaches the highest holding temperature in a calcining device, and the temperature difference between the temperature in the calcining furnace of the calcining device at the time of beginning to raise the temperature and the highest holding temperature.

By calcining the mixture under the above-described calcining conditions, it is easy to control the number average convexity 1 and 2, and the CD10 and the CD90 of the lithium metal composite oxide powder within the above-described ranges.

After the calcining step, the calcined product obtained by calcining is subjected to weak crushing under conditions of a weak crushing force or using a device with a weak crushing force.

As the crushing of the calcined product, crushing with a disc mill or the like is an exemplary example. As the crushing conditions of a reactant with a disc mill, for example, a disc mill is operated under the conditions of a rotation speed of 500 to 2000 rpm.

By crushing the calcined product under such conditions, the number average convexity 1 and 2 and the CD10 and the CD90 of the lithium metal composite oxide powder can be controlled within the above-described ranges.

<Solid secondary battery>

Next, a positive electrode, for which the lithium metal composite oxide powder according to one aspect of the present invention is used as a positive electrode active material for a solid secondary battery, and a solid secondary battery including this positive electrode will be described while describing the configuration of the solid secondary battery.

The solid secondary battery may be an all-solid secondary battery including a solid electrolyte layer consisting of a solid electrolyte, or may be a solid secondary battery in which the solid electrolyte layer contains a small amount of an organic solvent or an ionic liquid.

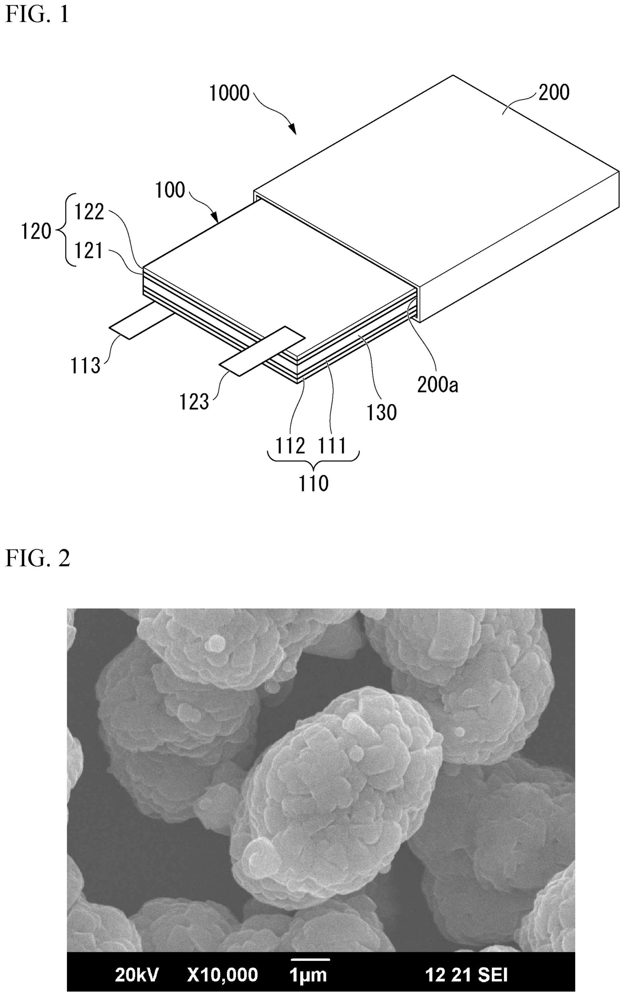

FIG. 1 is a schematic view showing an example of a solid secondary battery. A solid secondary battery 1000 shown in FIG. 1 includes a laminate 100 including a positive electrode 110, a negative electrode 120, and a solid electrolyte layer 130, and an exterior body 200 accommodating the laminate 100. In addition, the solid secondary battery 1000 may have a bipolar structure in which a positive electrode active material and a negative electrode active material are disposed on both sides of a current collector. As a specific example of the bipolar structure, for example, a structure described in JP-A-2004-95400 is an exemplary example. A material which configures each member will be described below.

The laminate 100 may include an external terminal 113 that is connected to a positive electrode current collector 112, and an external terminal 123 that is connected to a negative electrode current collector 122. In addition, the solid secondary battery 1000 may include a separator between the positive electrode 110 and the negative electrode 120.

The solid secondary battery 1000 further includes an insulator (not shown) that insulates the laminate 100 and the exterior body 200 from each other and a sealant (not shown) that seals an opening portion 200a of the exterior body 200.

As the exterior body 200, a container formed of a highly corrosion-resistant metal material such as aluminum, stainless steel, or nickel-plated steel can be used. In addition, as the exterior body 200, a container obtained by processing a laminate film having at least one surface on which a corrosion resistant process has been carried out into a bag shape can also be used.

As the shape of the solid secondary battery 1000, for example, shapes such as a coin-type, a button type, a paper-type (or a sheet-type), a cylindrical type, a square shape, and a laminate type (pouch type) can be exemplary examples.

As an example of the solid secondary battery 1000, a form in which one laminate 100 is provided is shown in the drawings, but the present embodiment is not limited thereto. The solid secondary battery 1000 may have a configuration in which the laminate 100 is used as a unit cell and a plurality of unit cells (laminates 100) are sealed inside the exterior body 200.

Hereinafter, each configuration will be described in order.

(Positive Electrode)

The positive electrode 110 includes a positive electrode active material layer 111 and the positive electrode current collector 112.

The positive electrode active material layer 111 contains the lithium metal composite oxide powder according to one aspect of the present invention described above and a solid electrolyte. In addition, the positive electrode active material layer 111 may contain a conductive material and a binder.

(Solid electrolyte)

As the solid electrolyte that is contained in the positive electrode active material layer 111, a solid electrolyte that has lithium ion conductivity and is used in well-known solid secondary battery can be adopted. As the solid electrolyte, an inorganic electrolyte and an organic electrolyte can be exemplary examples.

As the inorganic electrolyte, an argyrodite-type sulfide solid electrolyte, an oxide-based solid electrolyte, a sulfide-based solid electrolyte, and a hydride-based solid electrolyte can be exemplary examples. As the organic electrolyte, polymer-based solid electrolytes are exemplary examples. As each electrolyte, compounds described in WO2020/208872A1, US2016/0233510A1, US2012/0251871A1, and US2018/0159169A1 are exemplary examples, and the following compounds are exemplary examples.

(Argyrodite-type sulfide solid electrolyte)

As the argyrodite-type sulfide solid electrolyte, for example, $Li_6PS_5Cl$, $Li_6PS_5Br$, and $Li_6PS_5I$ are exemplary examples.

(Oxide-based solid electrolyte)

As the oxide-based solid electrolyte, for example, a perovskite-type oxide, a NASICON-type oxide, a LISICON-type oxide, a garnet-type oxide, and the like are exemplary examples. As specific examples of each oxide, compounds described in WO2020/208872A1, US2016/0233510A1, and US2020/0259213A1 are exemplary examples, and for example, the following compounds are exemplary examples.

As the perovskite-type oxide, Li-La-Ti-based oxides such as $Li_aLa_{1-a}TiO_3$ ($0 < a < 1$), Li-La-Ta-based oxides such as $Li_bLa_{1-b}TaO_3$ ($0 < b < 1$), and Li-La-Nb-based oxides such as $Li_cLa_{1-c}NbO_3$ ($0 < c < 1$) are exemplary examples.

As the NASICON-type oxide, $Li_{1+d}Al_dTi_{2-d}(PO_4)_3$ ($0 \leq d \leq 1$) and the like are exemplary examples. The NASICON-type oxide is an oxide represented by $Li_mM^1{}_nM^2{}_oP_pO_q$ (in the formula, $M^1$ is one or more elements selected from the group consisting of B, Al, Ga, In, C, Si, Ge, Sn, Sb, and Se, $M^2$ is one or more elements selected from the group consisting of Ti, Zr, Ge, In, Ga, Sn, and Al, and m, n, o, p, and q are random positive numbers).

As the LISICON-type oxide, an oxide represented by $Li_4M^3O_4$-$Li_3M^4O_4$ ($M^3$ is one or more elements selected from the group consisting of Si, Ge, and Ti, and $M^4$ is one or more elements selected from the group consisting of P, As, and V), and the like are exemplary examples.

As the garnet-type oxide, an Li-La-Zr-based oxide such as $Li_7La_3Zr_2O_{12}$ (also referred to as LLZ), and the like are exemplary examples.

The oxide-based solid electrolyte may be a crystalline material or an amorphous material.

(Sulfide-based solid electrolyte)

As the sulfide-based solid electrolyte, $Li_2S$-$P_2S_5$-based compounds, $Li_2S$-$SiS_2$-based compounds, $Li_2S$-$GeS_2$-based compounds, $Li_2S$-$B_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds, and $Li_{10}GeP_2S_{12}$-based compounds are exemplary examples.

In the present specification, the expression "-based compound" indicating the sulfide-based solid electrolyte is used as a general term for solid electrolytes primarily containing raw materials such as "$Li_2S$" and "$P_2S_5$" described before the "-based compound". For example, the $Li_2S$-$P_2S_5$-based compounds include solid electrolytes primarily containing $Li_2S$ and $P_2S_5$ and further containing a different raw material. The proportion of $Li_2S$ that is contained in the $Li_2S$-$P_2S_5$-based compound is, for example, 50 to 90 mass% with respect to the entire $Li_2S$-$P_2S_5$-based compound. The proportion of $P_2S_5$ that is contained in the $Li_2S$-$P_2S_5$-based compound is, for example, 10 to 50 mass% with respect to the entire $Li_2S$-$P_2S_5$-based compound. In addition, the proportion of the different raw material that is contained in the $Li_2S$-$P_2S_5$-based compound is, for example, 0 to 30 mass% with respect to the entire $Li_2S$-$P_2S_5$-based compound. In addition, the $Li_2S$-$P_2S_5$-based compound also includes a solid electrolyte having a different mixing ratio of $Li_2S$ and $P_2S_5$.

As the $Li_2S$-$P_2S_5$-based compound, $Li_2S$-$P_2S_5$, $Li_2S$-$P_2S_5$-$LiI$, $Li_2S$-$P_2S_5$-$LiCl$, $Li_2S$-$P_2S_5$-$LiBr$, $Li_2S$-$P_2S_5$-$LiI$-$LiBr$, $Li_2S$-$P_2S_5$-$Li_2O$, $Li_2S$-$P_2S_5$-$Li_2O$-$LiI$, $Li_2S$-$P_2S_5$-$Z_mS_n$ (m and n are positive numbers, and Z is Ge, Zn, or Ga.), and the like are exemplary examples.

As the $Li_2S$-$SiS_2$-based compound, $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$, $Li_2S$-$SiS_2$-$P_2S_5$-$LiCl$, $Li_2S$-$SiS_2$-$Li_3PO_4$, $Li_2S$-$SiS_2$-$Li_2SO_4$, $Li_2S$-$SiS_2$-$Li_xMO_y$ (x and y are positive numbers, and M is P, Si, Ge, B, Al, Ga, or In.), and the like are exemplary examples.

As the $Li_2S$-$GeS_2$-based compounds, $Li_2S$-$GeS_2$ and $Li_2S$-$GeS_2$-$P_2S_5$ are exemplary examples.

The sulfide-based solid electrolyte may be a crystalline material or an amorphous material.

(Hydride-based solid electrolyte)

As a hydride-based solid electrolyte material, $LiBH_4$, $LiBH_4$-$3KI$, $LiBH_4$-$PI_2$, $LiBH_4$-$P_2S_5$, $LiBH_4$-$LiNH_2$, $3LiBH_4$-$LiI$, $LiNH_2$, $Li_2AlH_6$, $Li(NH_2)_2I$, $Li_2NH$, $LiGd(BH_4)_3Cl$, $Li_2(BH_4)(NH_2)$, $Li_3(NH_2)I$, and $Li_4(BH_4)(NH_2)_3$ are exemplary examples.

(Polymer-based solid electrolyte)

As the polymer-based solid electrolyte, for example, organic polymer electrolytes such as polymer compounds containing one or more selected from the group consisting of a polyethylene oxide-based polymer compound, a polyorganosiloxane chain, and a polyoxyalkylene chain can be exemplary examples. In addition, it is also possible to use a so-called gel-type solid electrolyte in which a non-aqueous electrolytic solution is held in a polymer compound.

It is possible to use two or more kinds of the solid electrolytes in combination in a range in which the effects of the invention are not impaired.

An average particle size of the powder of the solid electrolyte is preferably 50 $\mu$m or less, more preferably 10 $\mu$m or less, and still more preferably 1 $\mu$m or less.

(Conductive material)

As a conductive material in the positive electrode active material layer 111, a carbon material can be used. As the carbon material, a graphite powder, carbon black (for example, acetylene black), a fibrous carbon material, and the like can be exemplary examples.

The proportion of the conductive material in the positive electrode active material layer 111 is preferably 1 part by mass or more and 10 parts by mass or less with respect to 100 parts by mass of the positive electrode active material.

(Binder)

As a binder in the positive electrode, a thermoplastic resin can be used. As the thermoplastic resin, polyimide resins; fluororesins such as polyvinylidene fluoride (hereinafter, may be referred to as PVdF) and polytetrafluoroethylene; polyolefin resins such as polyethylene and polypropylene, and the resins described in WO2019/098384A1 or US2020/0274158A1 can be exemplary examples.

(Positive electrode current collector)

As the positive electrode current collector 112 included in the positive electrode 110, a strip-shaped member formed of a metal material such as Al, Ni, or stainless steel as a forming material can be used.

As a method for supporting the positive electrode active material layer 111 by the positive electrode current collector 112, a method for pressure-molding the positive electrode active material layer 111 on the positive electrode current collector 112 is an exemplary example. A cold press or a hot press can be used for the pressure-molding.

In addition, the positive electrode active material layer 111 may be supported by the positive electrode current collector 112 by preparing a paste of a mixture of the positive electrode active material, the solid electrolyte, the conductive material, and the binder using an organic solvent to produce a positive electrode mixture, applying and drying the obtained positive electrode mixture on at least one surface of the positive electrode current collector 112, and fixing the positive electrode mixture by pressing.

In addition, the positive electrode active material layer 111 may be supported by the positive electrode current collector 112 by preparing a paste of a mixture of the positive electrode active material, the solid electrolyte, and the conductive material using an organic solvent to produce a positive electrode mixture, applying and drying the obtained positive electrode mixture on at least one surface of the positive electrode current collector 112, and calcining the positive electrode mixture.

As the organic solvent which can be used in the positive electrode mixture, N-methyl-2-pyrrolidone (hereinafter, may be referred to as NMP) is an exemplary example.

As a method for applying the positive electrode mixture to the positive electrode current collector 112, for example, a slit die coating method, a screen coating method, a curtain coating method, a knife coating method, a gravure coating method, and an electrostatic spraying method are exemplary examples.

The positive electrode can be manufactured by the method mentioned above.

The positive electrode 110 can be manufactured by the method mentioned above. As a combination of specific materials that are used for the positive electrode 110, combinations shown in Table 1 with the positive electrode active material of the present embodiment are exemplary examples.

[Table 1]

| Solid electrolyte | Binder | Conductive material |
|---|---|---|
| Perovskite-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| NASICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| LISICON-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| Garnet-type oxide | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 2]

| Solid electrolyte | Binder | Conductive material |
|---|---|---|
| $Li_2S$-$P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$SiS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$GeS_2$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_2S$-$B_2S_3$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

[Table 3]

| Solid electrolyte | Binder | Conductive material |
|---|---|---|
| $LiI-Si_2S-P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $LiI-Li_2S-P_2O_3$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $LiI-Li_3PO_4-P_2S_5$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |
| $Li_{10}GeP_2S_{12}$-based compound | Polyimide-based resin | Graphite powder |
| | | Carbon black |
| | | Fibrous carbon material |
| | Fluororesin | Graphite powder |
| | | Carbon black |
| | | Fibrous carbon material |
| | Polyolefin resin | Graphite powder |
| | | Carbon black |
| | | Fibrous carbon material |

(Negative electrode)

The negative electrode 120 includes a negative electrode active material layer 121 and the negative electrode current collector 122. The negative electrode active material layer 121 contains a negative electrode active material. In addition, the negative electrode active material layer 121 may contain a solid electrolyte and a conductive material. As the negative electrode active material, the negative electrode current collector, the solid electrolyte, the conductive material, and the binder, those described above can be used.

As a method for supporting the negative electrode active material layer 121 by the negative electrode current collector 122, similar to the case of the positive electrode 110, a method in which the negative electrode active material layer 121 is formed by pressure molding, a method for applying a paste-like negative electrode mixture containing a negative electrode active material on the negative electrode current collector 122, and drying and then compressing by pressing, and a method for applying a paste-like negative electrode mixture containing a negative electrode active material onto the negative electrode current collector 122, drying and then calcining are exemplary examples.

(Solid electrolyte layer)

The solid electrolyte layer 130 contains the above-described solid electrolyte.

In one aspect of the present invention, the solid electrolyte layer 130 consists of a solid electrolyte.

In one aspect of the present invention, the solid electrolyte layer 130 may contain any one or both of a solid electrolyte, a small amount of an organic solvent, or an ionic liquid.

As the organic solvent which may be included in the solid electrolyte layer 130, ethylene carbonate, propylene carbonate, and ethyl methyl carbonate are exemplary examples.

The ionic liquid which may be contained in the solid electrolyte 130 is composed of an anion such as triflate or bis(trifluoromethanesulfonyl)imide and a cation such as ammonium, imidazolium, or pyridinium.

A weight ratio of any one or both of the organic solvent and the ionic liquid to the total amount of the solid electrolyte included in the solid electrolyte layer 130 is preferably 0.1% to 1.0% by weight.

The solid electrolyte layer 130 can be formed by depositing a solid electrolyte of an inorganic substance on the surface of the positive electrode active material layer 111 in the above-described positive electrode 110 by a sputtering method.

In addition, the solid electrolyte layer 130 can be formed by applying and drying a paste-like mixture containing a solid electrolyte on the surface of the positive electrode active material layer 111 in the above-described positive electrode 110. The solid electrolyte layer 130 may be formed by pressure-molding the dried paste-like mixture and further pressurizing the paste-like mixture by a cold isostatic pressure method (CIP).

The laminate 100 can be manufactured by laminating the negative electrode 120 on the solid electrolyte layer 130 provided on the positive electrode 110 as described above using a well-known method in an aspect in which the negative electrode active material layer 121 is in contact with the surface of the solid electrolyte layer 130.

In the solid secondary battery having the above-described configuration, since the positive electrode active material layer uses the lithium metal composite oxide powder of the present embodiment described above, the resistance is low even in a case where charging and discharging of the solid secondary battery are repeated.

[Measurement of resistance after charging and discharging cycle test]

(Manufacturing of solid secondary battery)

The following operation is performed in a glove box under an argon atmosphere.

(Manufacturing of positive electrode and solid secondary battery)

0.16 g of a solid electrolyte (manufactured by MSE, $75Li_2S \cdot 25P_2S_5$, average particle diameter: 1 $\mu$m or less) is put into a pellet molding mold (manufactured by HOZEN Corporation) having a $\varphi$ of 10 mm, the upper and lower punches are pushed into the mold, and the mold is pressurized up to 10 MPa with a uniaxial press machine, thereby manufacturing a solid electrolyte layer.

Next, 1.000 g of the coated lithium metal composite oxide powder as the positive electrode active material, 0.0543 g of a conductive material (acetylene black), and 8.6 mg of a solid electrolyte (manufactured by MSE, $Li_6PS_5Cl$) are weighed.

The positive electrode active material, the conductive material, and the solid electrolyte are mixed with each other in a mortar for 15 minutes to manufacture a positive electrode mixture, and 15 mg of the positive electrode mixture described above is put on the solid electrolyte layer molded in the mold. The upper punch is inserted again, and pressurization is performed up to 10 MPa with a uniaxial press machine to manufacture a positive electrode on the solid electrolyte layer.

Next, the lower punch is pulled out, a lithium metal foil (manufactured by Honjo Chemical Co., Ltd.) and an indium metal foil (manufactured by NIRAKO CO., LTD.) are placed on the solid electrolyte on the side opposite to the surface to which the positive electrode mixture is added, the lower punch is inserted again, the pressurization is performed up to 14 MPa with a uniaxial press, and the mixture is constrained from the outside to manufacture a solid secondary battery.

<Charging and discharging test>

Using the solid secondary battery manufactured by the above-described method, the charging and discharging test is carried out under the following conditions.

(Charging and discharging conditions)

Test temperature: 60°C
(First charging and discharging (first time))
Charging maximum voltage: 3.98 V, Charging current density: 0.1 C, Cutoff current density: 0.02 C, Constant current-constant voltage charging
Discharging minimum voltage: 1.38 V, Discharging current density: 0.1 C, Constant current discharging

(Charging and discharging cycle test)

Charging maximum voltage: 3.88 V, Charging current density: 0.2 C, Cutoff current density: 0.02 C, Constant current-constant voltage charging
Discharging minimum voltage: 1.38 V, Discharging current density: 0.2 C, Constant current discharging
Charging and discharging are defined as one cycle, and the total of 20 cycles are carried out.

(Alternating current impedance measurement)

After constant current-constant voltage charging at charging maximum voltage: 3.98 V, charging current density: 0.1 C, cutoff current density: 0.02 C, the alternating current impedance is measured at a voltage amplitude of 10mV and in a frequency range of 1 to 10 MHz at 25°C.
By the above-described method, an impedance value |Z| at a frequency of 0.1 Hz, which is obtained from the alternating current impedance measurement of the solid secondary battery, is calculated and used as a resistance value after the charging and discharging cycle test. In a case where the resistance value after the charging and discharging cycle test is 200 $\Omega$ or less, it is determined that the resistance is low even after the charging and discharging cycle test.

Examples

Next, the present invention will be described in more detail with reference to Examples.

<Composition analysis>

The composition analysis of the lithium metal composite oxide powder manufactured by the method which will be described later was carried out by the method described in [Composition analysis] above.

<Measurement of number average convexity>

By the method described in [Method for measuring number average convexity] described above, the number average convexity 1 and the number average convexity 2 of a lithium metal composite oxide powder manufactured by a method which will be described later were measured.

<Measurement of CD90 and CD10>

The CD90 and the CD10 of the lithium metal composite oxide powder manufactured by the method which will be described later were measured by the method described in [Method for measuring number average convexity] above.

<Measurement of BET specific surface area>

The BET specific surface area of the lithium metal composite oxide powder manufactured by the method which will be described later was measured by the method described in [Method of measuring BET specific surface area] above.

<Observation with electron microscope>

The lithium metal composite oxide powder manufactured by the method which will be described later was placed on a conductive sheet attached on a sample stage. Next, the lithium metal composite oxide powder was irradiated with an electron beam having an acceleration voltage of 15 kV using a scanning electron microscope, and SEM observation (magnification: 10000 times) was performed.
As a scanning electron microscope, JSM-5510 manufactured by JEOL Ltd. was used.

<Resistance measurement after charging and discharging cycle test>

A resistance value after the charging and discharging cycle test of the solid secondary battery using the positive electrode active material manufactured by the method which will be described later was measured by the method described in [Resistance measurement after charging and discharging cycle test] above.

<Coating treatment of lithium metal composite oxide>

In the manufacturing and evaluation of the solid secondary battery by the above-described method, 1 weight% $H_3BO_3$ (manufactured by Wako Pure Chemical Industries, Ltd.) was added and mixed with the lithium metal composite oxide powder manufactured in Examples and Comparative Examples which will be described later, and heat-treated at 300°C to form a lithium-boron composite oxide layer having a film thickness of about 5 nm on a surface of the lithium metal composite oxide, and the lithium-boron composite oxide layer was used as a positive electrode active material. Since the coating layer is extremely thin at about 5 nm, the positive electrode active material has the number average convexity 1, the number average convexity 2, the CD10, and the CD90 which are the same as those of the lithium metal composite oxide.

<<Example 1>>

<Manufacturing of lithium metal composite oxide E1>

[Nucleus generating step]

Using a device having a reaction vessel provided with a stirrer and an overflow pipe, a thickening tank connected to the overflow pipe, and a mechanism for circulating the thickening tank to the reaction vessel, water was put into the reaction vessel, then a sodium hydroxide aqueous solution was added thereto, and a liquid temperature was maintained at 30°C.
A nickel sulfate aqueous solution and a manganese sulfate aqueous solution were mixed at a ratio at which the atomic ratio of Ni to Mn was 0.35:0.65, thereby preparing a metal raw material mixed solution.
Next, ammonium sulfate crystals as a complexing agent were put into the reaction vessel, and the nitrogen gas was continuously supplied to the reaction vessel and the thickening tank. Under stirring, the metal raw material mixed solution was continuously added at a feeding rate of 10 mL/min, and an ammonium sulfate aqueous solution was continuously added to the reaction vessel at a proportion such that a ratio of a molar concentration of the manganese salt contained in the metal raw material solution to a molar concentration of ammonium in the reaction vessel was 1.6. In addition, a sodium hydroxide aqueous solution was suitably added dropwise such that the pH of the solution in the reaction vessel reaches 11.7 (setting temperature: 40°C).
After 2 hours from the start of the nucleus generating step, all the liquid feeding was stopped.

[Nucleus growth step]

Subsequently, in a where a nitrogen gas was continuously supplied to the reaction vessel and the thickening tank, the metal raw material mixed solution was continuously added at 8 mL/min to a reaction vessel, in which the nucleus generating step is performed, and the ammonium sulfate aqueous solution was continuously added to the reaction vessel at a proportion such that a ratio of a molar concentration of the manganese salt contained in the metal raw material solution to a molar concentration of ammonium in the reaction vessel was 1.6. In addition, the sodium hydroxide aqueous solution was suitably added dropwise such that the pH of the solution in the reaction vessel reaches 11.0 (measurement temperature: 40°C). After 94 hours had elapsed from the start of the nucleus growth step, the feeding of all liquids was stopped, and the crystallization reaction was ended.

The obtained nickel manganese metal composite hydroxide-containing slurry was washed and dewatered, and then dried at 105°C for 20 hours and sieved to obtain a nickel manganese metal composite hydroxide E1. The nickel manganese metal composite hydroxide E1 and the lithium hydroxide powder were weighed and mixed at a proportion such that the molar ratio of Li in the lithium hydroxide powder to Ni and Mn in the precursor was Li/(Ni + Mn) = 1.30, thereby obtaining a mixed raw material.

Thereafter, the obtained mixed raw material was calcined at 1000°C for 10 hours in an air atmosphere and crushed at a rotation speed of 1200 rpm using a disc mill to obtain a lithium metal composite oxide E1. In a case where a composition analysis was performed and the composition was matched with Compositional Formula (1), a = 0.34, M1 = Ni, and Mn were obtained. In addition, the proportion of Ni included in M1 was 54.7 mol%.

The lithium metal composite oxide E1 had a layered structure and had a specific surface area of 0.6 $m^2$/g.

Table 4 shows the measurement results of the number average convexity 1, the number average convexity 2, the CD10, the CD90, and the BET specific surface area of the lithium metal composite oxide E1. The same applies to the following examples and comparative examples. FIG. 2 shows a scanning electron micrograph of the lithium metal composite oxide E1.

<<Example 2>>

<Manufacturing of lithium metal composite oxide E2>

[Nucleus generating step]

Using a device having a reaction vessel provided with a stirrer and an overflow pipe, a thickening tank connected to the overflow pipe, and a mechanism for circulating the thickening tank to the reaction vessel, water was put into the reaction vessel, then a sodium hydroxide aqueous solution was added thereto, and a liquid temperature was maintained at 30°C.

A nickel sulfate aqueous solution, a cobalt sulfate aqueous solution, and a manganese sulfate aqueous solution were mixed together in proportions such that the atomic ratio among Ni, Co, and Mn was 0.34:0.14:0.52, thereby preparing a metal raw material mixed solution.

Next, ammonium sulfate crystals as a complexing agent were put into the reaction vessel, and the nitrogen gas was continuously supplied to the reaction vessel and the thickening tank. Under stirring, the metal raw material mixed solution was continuously added at a feeding rate of 10 mL/min, and the ammonium sulfate aqueous solution was continuously added to the reaction vessel at a proportion such that the ratio of the molar concentration of the manganese salt contained in the metal raw material solution to the molar concentration of ammonium in the reaction vessel was 1.2. In addition, a sodium hydroxide aqueous solution was suitably added dropwise such that the pH of the solution in the reaction vessel reaches 11.7 (setting temperature: 40°C).

After 2 hours from the start of the nucleus generating step, all the liquid feeding was stopped.

[Nucleus growth step]

Subsequently, in a state where a nitrogen gas was continuously supplied to the reaction vessel and the thickening tank, the metal raw material mixed solution was continuously added at 8 mL/min to a reaction vessel, in which the nucleus generating step is performed, and the ammonium sulfate aqueous solution was continuously added to the reaction vessel at a proportion such that a ratio of a molar concentration of the manganese salt contained in the metal raw material solution to a molar concentration of ammonium in the reaction vessel was 1.2. In addition, the sodium hydroxide aqueous solution was suitably added dropwise such that the pH of the solution in the reaction vessel reaches 11.0 (measurement temperature: 40°C). After 44 hours had elapsed from the start of the nucleus growth step, the feeding of all liquids was stopped, and the crystallization reaction was ended.

The obtained nickel-cobalt-manganese metal composite hydroxide-containing slurry was washed, dewatered, then, dried at 105°C for 20 hours, and sieved, thereby obtaining a nickel-cobalt-manganese metal composite hydroxide E2. The nickel-cobalt-manganese metal composite hydroxide E2 and the lithium hydroxide powder were weighed and mixed at a proportion such that the molar ratio of Li in the lithium hydroxide powder to Ni, Co, and Mn in the precursor was Li/(Ni + Co + Mn) = 1.30, thereby obtaining a mixed raw material.

Thereafter, the obtained mixed raw material was calcined at 900°C for 10 hours in an air atmosphere, and crushed at a rotation speed of 1200 rpm using a disc mill to obtain the lithium metal composite oxide E2. In a case where a composition analysis was performed and the composition was matched with Compositional Formula (1), a = 0.27, M1 = Ni, and Co and Mn were obtained. In addition, the proportion of Ni included in M1 was 47.3 mol%.

The lithium metal composite oxide E2 had a layered structure and had a specific surface area of 0.9 m$^2$/g.

<<Example 3>>

<Manufacturing of lithium metal composite oxide E3>

[Nucleus generating step]

Using a device having a reaction vessel provided with a stirrer and an overflow pipe, a thickening tank connected to the overflow pipe, and a mechanism for circulating the thickening tank to the reaction vessel, water was put into the reaction vessel, then a sodium hydroxide aqueous solution was added thereto, and a liquid temperature was maintained at 30°C.

A nickel sulfate aqueous solution, a cobalt sulfate aqueous solution, and a manganese sulfate aqueous solution were mixed together in proportions such that the atomic ratio among Ni, Co, and Mn was 0.17:0.17:0.66, thereby preparing a metal raw material mixed solution.

Next, ammonium sulfate crystals as a complexing agent were put into the reaction vessel, and the nitrogen gas was continuously supplied to the reaction vessel and the thickening tank. Under stirring, the metal raw material mixed solution was continuously added at a feeding rate of 10 mL/min, and an ammonium sulfate aqueous solution was continuously added to the reaction vessel at a proportion such that a ratio of a molar concentration of the manganese salt contained in the metal raw material solution to a molar concentration of ammonium in the reaction vessel was 1.6. In addition, a sodium hydroxide aqueous solution was suitably added dropwise such that the pH of the solution in the reaction vessel reaches 11.7 (setting temperature: 40°C).

After 2 hours from the start of the nucleus generating step, all the liquid feeding was stopped.

[Nucleus growth step]

Subsequently, in a state where a nitrogen gas was continuously supplied to the reaction vessel and the thickening tank, the metal raw material mixed solution was continuously added at 8 mL/min to a reaction vessel, in which the nucleus generating step is performed, and the ammonium sulfate aqueous solution was continuously added to the reaction vessel at a proportion such that a ratio of a molar concentration of the manganese salt contained in the metal raw material solution to a molar concentration of ammonium in the reaction vessel was 1.2. In addition, the sodium hydroxide aqueous solution was suitably added dropwise such that the pH of the solution in the reaction vessel reaches 11.0 (measurement temperature: 40°C). After 91 hours had elapsed from the start of the nucleus growth step, the feeding of all liquids was stopped, and the crystallization reaction was ended.

The obtained nickel-cobalt-manganese metal composite hydroxide-containing slurry was washed, dewatered, then, dried at 105°C for 20 hours, and sieved, thereby obtaining a nickel-cobalt-manganese metal composite hydroxide E3. The nickel-cobalt-manganese metal composite hydroxide E3 and the lithium hydroxide powder were weighed and mixed at a proportion such that the molar ratio of Li in the lithium hydroxide powder to Ni, Co, and Mn in the precursor was Li/(Ni + Co + Mn) = 1.50, thereby obtaining a mixed raw material.

Thereafter, the obtained mixed raw material was calcined at 900°C for 10 hours in an air atmosphere, and crushed at a rotation speed of 1200 rpm using a disc mill to obtain the lithium metal composite oxide E3. In a case where a composition analysis was performed and the composition was matched with Compositional Formula (1), a = 0.47, M1 = Ni, and Co and Mn were obtained. In addition, the proportion of Ni included in M1 was 32.5 mol%.

The lithium metal composite oxide E3 had a layered structure and had a specific surface area of 0.9 m$^2$/g.

<<Example 4>>

<Manufacturing of lithium metal composite oxide E4>

[Nucleus generating step]

Using a device having a reaction vessel provided with a stirrer and an overflow pipe, a thickening tank connected to the overflow pipe, and a mechanism for circulating the thickening tank to the reaction vessel, water was put into the reaction vessel, then a sodium hydroxide aqueous solution was added thereto, and a liquid temperature was maintained at 30°C.

A nickel sulfate aqueous solution, a cobalt sulfate aqueous solution, and a manganese sulfate aqueous solution were mixed together in proportions such that the atomic ratio among Ni, Co, and Mn was 0.23:0.23:0.54, thereby preparing a metal raw material mixed solution.

Next, ammonium sulfate crystals as a complexing agent were put into the reaction vessel, and the nitrogen gas was continuously supplied to the reaction vessel and the thickening tank. Under stirring, the metal raw material mixed solution was continuously added at a feeding rate of 10 mL/min, and the ammonium sulfate aqueous solution was continuously added to the reaction vessel at a proportion such that the ratio of the molar concentration of the manganese salt contained in the metal raw material solution to the molar concentration of ammonium in the reaction vessel was 1.3. In addition, a sodium hydroxide aqueous solution was suitably added dropwise such that the pH of the solution in the reaction vessel reaches 12.5 (setting temperature: 40°C).

After 2 hours from the start of the nucleus generating step, all the liquid feeding was stopped.

[Nucleus growth step]

Subsequently, in a state where a nitrogen gas was continuously supplied to the reaction vessel and the thickening tank, the metal raw material mixed solution was continuously added at 8 mL/min to a reaction vessel, in which the nucleus generating step is performed, and the ammonium sulfate aqueous solution was continuously added to the reaction vessel at a proportion such that a ratio of a molar concentration of the manganese salt contained in the metal raw material solution to a molar concentration of ammonium in the reaction vessel was 1.3. In addition, the sodium hydroxide aqueous solution was suitably added dropwise such that the pH of the solution in the reaction vessel reaches 11.0 (measurement temperature: 40°C). After 47 hours had elapsed from the start of the nucleus growth step, the feeding of all liquids was stopped, and the crystallization reaction was ended.

The obtained nickel-cobalt-manganese metal composite hydroxide-containing slurry was washed, dewatered, then, dried at 105°C for 20 hours, and sieved, thereby obtaining a nickel-cobalt-manganese metal composite hydroxide E4. The nickel-cobalt-manganese metal composite hydroxide E4 and the lithium hydroxide powder were weighed and mixed at a proportion such that the molar ratio of Li in the lithium hydroxide powder to Ni, Co, and Mn in the precursor was Li/(Ni + Co + Mn) = 1.30, thereby obtaining a mixed raw material.

Thereafter, the obtained mixed raw material was calcined at 900°C for 10 hours in an air atmosphere, and crushed at a rotation speed of 1200 rpm using a disc mill to obtain the lithium metal composite oxide E4. In a case where a composition analysis was performed and the composition was matched with Compositional Formula (1), a = 0.28, M1 = Ni, and Co and Mn were obtained. In addition, the proportion of Ni included in M1 was 32.5 mol%.

The lithium metal composite oxide E4 had a layered structure and had a specific surface area of 0.9 $m^2/g$.

<<Comparative Example 1>>

<Manufacturing of lithium metal composite oxide C1>

[Nucleus generating step]

Using a device having a reaction vessel provided with a stirrer and an overflow pipe, a thickening tank connected to the overflow pipe, and a mechanism for circulating the thickening tank to the reaction vessel, water was put into the reaction vessel, then a sodium hydroxide aqueous solution was added thereto, and a liquid temperature was maintained at 30°C.

A nickel sulfate aqueous solution, a cobalt sulfate aqueous solution, and a manganese sulfate aqueous solution were mixed together in proportions such that the atomic ratio among Ni, Co, and Mn was 0.23:0.23:0.54, thereby preparing a metal raw material mixed solution.

Next, ammonium sulfate crystals as a complexing agent were put into the reaction vessel, and the nitrogen gas was continuously supplied to the reaction vessel, and the thickening tank was set to be under an air atmosphere. Under stirring, the metal raw material mixed solution was continuously added at a feeding rate of 10 mL/min, and the ammonium sulfate aqueous solution was continuously added to the reaction vessel at a proportion such that the ratio of the molar concentration of the manganese salt contained in the metal raw material solution to the molar concentration of ammonium in the reaction vessel was 1.3. In addition, a sodium hydroxide aqueous solution was suitably added dropwise such that the pH of the solution in the reaction vessel reaches 11.7 (setting temperature: 40°C).

After 2 hours from the start of the nucleus generating step, all the liquid feeding was stopped.

[Nucleus growth step]

Subsequently, in a state where a nitrogen gas was continuously supplied to the reaction vessel and the thickening tank was set to be under the air atmosphere, the metal raw material mixed solution was continuously added at 8 mL/min to a reaction vessel, in which the nucleus generating step is performed, and the ammonium sulfate aqueous solution was continuously added to the reaction vessel at a proportion such that a ratio of a molar concentration of the manganese salt contained in the metal raw material solution to a molar concentration of ammonium in the reaction vessel was 1.3. In addition, the sodium hydroxide aqueous solution was suitably added dropwise such that the pH of the solution in the reaction vessel reaches 11.0 (measurement temperature: 40°C). After 27 hours had elapsed from the start of the nucleus growth step, the feeding of all liquids was stopped, and the crystallization reaction was ended.

The obtained nickel-cobalt-manganese metal composite hydroxide-containing slurry was washed, dewatered, then, dried at 105°C for 20 hours, and sieved, thereby obtaining a nickel-cobalt-manganese metal composite hydroxide C1. The nickel-cobalt-manganese metal composite hydroxide C1 and the lithium hydroxide powder were weighed and mixed at a proportion such that the molar ratio of Li in the lithium hydroxide powder to Ni, Co, and Mn in the precursor was Li/(Ni + Co + Mn) = 1.30, thereby obtaining a mixed raw material.

Thereafter, the obtained mixed raw material was calcined at 1100°C for 10 hours in an air atmosphere, crushed at a rotation speed of 1200 rpm using a disc mill, and further crushed with an agate mortar to obtain the lithium metal composite oxide C1. In a case where a composition analysis was performed and the composition was matched with Compositional Formula (1), a = 0.29, M1 = Ni, and Co and Mn were obtained. In addition, the proportion of Ni included in M1 was 33.2 mol%.

The lithium metal composite oxide C1 had a layered structure and had a specific surface area of 0.6 $m^2$/g.

<<Comparative Example 2>>

<Manufacturing of lithium metal composite oxide C2>

[Nucleus generating step]

Using a device having a reaction vessel provided with a stirrer and an overflow pipe, a thickening tank connected to the overflow pipe, and a mechanism for circulating the thickening tank to the reaction vessel, water was put into the reaction vessel, then an aqueous sodium hydroxide solution was added thereto, and a liquid temperature was maintained at 30°C.

A nickel sulfate aqueous solution, a cobalt sulfate aqueous solution, and a manganese sulfate aqueous solution were mixed together in proportions such that the atomic ratio among Ni, Co, and Mn was 0.34:0.33:0.33, thereby preparing a metal raw material mixed solution.

Next, ammonium sulfate crystals as a complexing agent were put into the reaction vessel, and the nitrogen gas was continuously supplied to the reaction vessel, and the thickening tank was set to be under an air atmosphere. Under stirring, the metal raw material mixed solution was continuously added at a feeding rate of 10 mL/min, and the ammonium sulfate aqueous solution was continuously added to the reaction vessel at a proportion such that the ratio of the molar concentration of the manganese salt contained in the metal raw material solution to the molar concentration of ammonium in the reaction vessel was 0.8. In addition, a sodium hydroxide aqueous solution was suitably added dropwise such that the pH of the solution in the reaction vessel reaches 11.7 (setting temperature: 40°C).

After 2 hours from the start of the nucleus generating step, all the liquid feeding was stopped.

[Nucleus growth step]

Subsequently, in a state where a nitrogen gas was continuously supplied to the reaction vessel and the thickening tank was set to be under the air atmosphere, the metal raw material mixed solution was continuously added at 8 mL/min to a reaction vessel, in which the nucleus generating step is performed, and the ammonium sulfate aqueous solution was continuously added to the reaction vessel at a proportion such that a ratio of a molar concentration of the manganese salt contained in the metal raw material solution to a molar concentration of ammonium in the reaction vessel was 0.8. In addition, the sodium hydroxide aqueous solution was suitably added dropwise such that the pH of the solution in the reaction vessel reaches 11.0 (measurement temperature: 40°C). After 18 hours had elapsed from the start of the nucleus growth step, the feeding of all liquids was stopped, and the crystallization reaction was ended.

The obtained nickel-cobalt-manganese metal composite hydroxide-containing slurry was washed, dewatered, then, dried at 105°C for 20 hours, and sieved, thereby obtaining a nickel-cobalt-manganese metal composite hydroxide C2. The nickel-cobalt-manganese metal composite hydroxide C2 and the lithium hydroxide powder were weighed and mixed at a proportion such that the molar ratio of Li in the lithium hydroxide powder to Ni, Co, and Mn in the precursor was Li/(Ni + Co + Mn) = 1.03, thereby obtaining a mixed raw material.

Thereafter, the obtained mixed raw material was calcined at 950°C for 10 hours in an air atmosphere, and crushed at a rotation speed of 1200 rpm using a disc mill to obtain the lithium metal composite oxide C2. In a case where a composition analysis was performed and the composition was matched with Compositional Formula (1), a = 0.03, M1 = Ni, and Co and Mn were obtained. In addition, the proportion of Ni included in M1 was 34.9 mol%.

The lithium metal composite oxide C2 had a layered structure and had a specific surface area of 1.0 $m^2$/g.

[Table 4]

| | Composition | | Number average convexity 1 | Number average convexity 2 | CD90 [μm] | CD10 [μm] | BET specific surface area [m²/g] | Resistance after cycle test [Ω] |
|---|---|---|---|---|---|---|---|---|
| | a | Ni/M1 [mol%] | | | | | | |
| Example 1 | 0.34 | 54.7 | 0.909 | 0.979 | 12.4 | 5.5 | 0.6 | 134 |
| Example 2 | 0.27 | 47.3 | 0.968 | 0.992 | 8.9 | 4.8 | 0.9 | 80 |
| Example 3 | 0.47 | 32.5 | 0.888 | 0.966 | 13.1 | 4.4 | 0.9 | 190 |
| Example 4 | 0.28 | 32.5 | 0.909 | 0.973 | 10.7 | 4.4 | 1.4 | 117 |
| Comparative Example 1 | 0.29 | 33.2 | 0.851 | 0.926 | 20.9 | 6.7 | 0.6 | 259 |
| Comparative Example 2 | 0.03 | 34.9 | 0.884 | 0.977 | 14.6 | 5.1 | 1 | 224 |

In Examples 1 to 4 in which the CD50 to the CD90 satisfies 0.860 to 0.980, a solid secondary battery having low resistance, in which the resistance after the charging and discharging cycle test was less than 200 Ω was obtained. It is presumed that this is because, in Examples 1 to 4, the contact area between the lithium metal composite oxide powder and the solid electrolyte is increased, and the contact is further maintained.

In Comparative Example 1 in which the CD50 to the CD90 was less than 0.860, it is presumed that the resistance after the charging and discharging cycle test was increased because the solid electrolyte was difficult to enter the recess portion on the surface of one particle of the lithium metal composite oxide, and the contact area between the lithium metal composite oxide powder and the solid electrolyte was small.

In Comparative Example 2 in which a was less than 0.1, it is presumed that the crystal plane of the lithium metal composite oxide was unstable and the interface bonding with the solid electrolyte was poor. Thus, the resistance after the charging and discharging cycle test was increased.

REFERENCE SIGNS LIST

100 Laminate
110 Positive electrode
111 Positive electrode active material layer
112 Positive electrode current collector
113 External terminal
120 Negative electrode
121 Negative electrode active material layer
122 Negative electrode current collector
123 External terminal
130 Solid electrolyte layer
200 Exterior body
200a Opening portion
1000 Solid secondary battery

Claims

1.   A lithium metal composite oxide powder that has a layered structure and is used for a solid secondary battery containing at least Li, Mn, and an element M1,

wherein, in a volume-based cumulative particle size distribution of a projected area equivalent circle diameter of the lithium metal composite oxide powder, which is measured by static image analysis, in a case where the equivalent circle diameters (μm), at which cumulative ratios from a small particle side are 50% and 90%, are each defined as CD50 and CD90,
a number average convexity of particles satisfying a range of the CD50 or more and the CD90 or less is 0.860 or more and 0.980 or less, and
Compositional Formula (1) below is satisfied,

$$aLi_2MnO_3 \cdot (1 - a)LiM1O_2 \quad ... \quad (1)$$

(in Formula (1), 0.1 < a < 1, and M1 is one or more elements selected from the group consisting of Ni, Co, Mn, Fe, Cu, Ti, V, Na, Mg, Ca, Sr, Ba, B, Al, Si, P, W, Mo, Nb, Zn, Sn, Zr, Cr, Ga, Ge, Pd, Ag, Cd, In, and V).

2. The lithium metal composite oxide powder according to Claim 1,
   wherein, in the cumulative particle size distribution, in a case where the equivalent circle diameter ($\mu$m), at which the cumulative ratio from the small particle side is 10%, is defined as CD10, a number average convexity of particles satisfying a range of the CD10 or more and the CD50 or less is 0.950 or more and less than 1.

3. The lithium metal composite oxide powder according to Claim 1 or 2,
   wherein the CD90 is more than 7.0 $\mu$m and 20.0 $\mu$m or less.

4. The lithium metal composite oxide powder according to Claim 2 or 3,
   wherein the CD10 is 3.0 $\mu$m or more and 7.0 $\mu$m or less.

5. The lithium metal composite oxide powder according to any one of Claims 1 to 4,
   wherein a BET specific surface area is 0.3 $m^2$/g or more and 2.0 $m^2$/g or less.

6. The lithium metal composite oxide powder according to any one of Claims 1 to 5,
   wherein the element M1 essentially includes Ni, and a proportion of Ni in a total amount of the element M1 is 20 mol% or more.

7. A positive electrode active material for a solid secondary battery, comprising:
   the lithium metal composite oxide powder according to any one of Claims 1 to 6.

8. A positive electrode for a solid secondary battery, comprising:
   the positive electrode active material for a solid secondary battery according to Claim 7.

9. A solid secondary battery comprising:
   the positive electrode for a solid secondary battery according to Claim 8.

FIG. 1

FIG. 2

20kV    X10,000    1μm    12 21 SEI

FIG. 3

FIG. 4

FIG. 5

## INTERNATIONAL SEARCH REPORT

| International application No. |
|---|
| **PCT/JP2023/015677** |

**A. CLASSIFICATION OF SUBJECT MATTER**

*H01M 4/505*(2010.01)i; *H01M 4/525*(2010.01)i; *H01M 10/052*(2010.01)i; *H01M 10/0562*(2010.01)i
FI: H01M4/505; H01M4/525; H01M10/0562; H01M10/052

According to International Patent Classification (IPC) or to both national classification and IPC

**B. FIELDS SEARCHED**

Minimum documentation searched (classification system followed by classification symbols)

H01M4/505; H01M4/525; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2023-010687 A (SUMITOMO CHEMICAL COMPANY, LIMITED) 20 January 2023 (2023-01-20)<br>paragraphs [0124], [0195]-[0201], [0235], example 1 | 1-9 |
| X | JP 2016-139569 A (SUMITOMO METAL MINING CO., LTD.) 04 August 2016 (2016-08-04)<br>paragraphs [0106]-[0109], [0112]-[0117], [0133], [0148], example 3, table 3 | 1-6 |
| A | | 7-9 |
| A | JP 2021-022547 A (JX NIPPON MINING & METALS CORP.) 18 February 2021 (2021-02-18)<br>paragraph [0058] | 1-9 |
| A | JP 2022-514410 A (HALDOR TOPSOE AS) 10 February 2022 (2022-02-10)<br>claim 14, paragraph [0134] | 1-9 |
| A | JP 2019-091719 A (SUMITOMO CHEMICAL COMPANY, LIMITED) 13 June 2019 (2019-06-13)<br>claims, paragraphs [0071]-[0074] | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 June 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/015677**

| Patent document cited in search report | | | Publication date (day/month/year) | Patent family member(s) | Publication date (day/month/year) |
|---|---|---|---|---|---|
| JP | 2023-010687 | A | 20 January 2023 | (Family: none) | |
| JP | 2016-139569 | A | 04 August 2016 | (Family: none) | |
| JP | 2021-022547 | A | 18 February 2021 | (Family: none) | |
| JP | 2022-514410 | A | 10 February 2022 | US 2022/0013771 A1 claim 14, paragraph [0146] WO 2020/127526 A1 CN 113165905 A KR 10-2021-0104034 A | |
| JP | 2019-091719 | A | 13 June 2019 | US 2016/0043396 A1 claims, paragraphs [0122]-[0131] WO 2014/192758 A1 CN 105247710 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021022547 A
- JP 2004095400 A
- WO 2020208872 A1
- US 20160233510 A1
- US 20120251871 A1

- US 20180159169 A1
- US 20200259213 A1
- WO 2019098384 A1
- US 20200274158 A1